(19) Europäisches Patentamt / European Patent Office / Office européen des brevets

(11) **EP 1 913 569 B1**

(12) **EUROPÄISCHE PATENTSCHRIFT**

(45) Veröffentlichungstag und Bekanntmachung des Hinweises auf die Patenterteilung:
**08.10.2008 Patentblatt 2008/41**

(21) Anmeldenummer: **06775793.0**

(22) Anmeldetag: **03.08.2006**

(51) Int Cl.:
**G08G 5/04** *(2006.01)*

(86) Internationale Anmeldenummer:
**PCT/DE2006/001354**

(87) Internationale Veröffentlichungsnummer:
**WO 2007/016905 (15.02.2007 Gazette 2007/07)**

(54) **VERFAHREN ZUR FLUGFÜHRUNG MEHRERER IM VERBAND FLIEGENDER FLUGZEUGE**

METHOD FOR FLIGHT CONTROL OF A PLURALITY OF AIRCRAFT FLYING IN FORMATION

PROCEDE DE GUIDAGE D'AVION PERMETTANT DE GUIDER PLUSIEURS AVIONS VOLANT EN FORMATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.08.2005 DE 102005038017**

(43) Veröffentlichungstag der Anmeldung:
**23.04.2008 Patentblatt 2008/17**

(73) Patentinhaber: **EADS Deutschland GmbH**
**85521 Ottobrunn (DE)**

(72) Erfinder:
• **SOIJER, Marco, Willem**
**89250 Senden (DE)**
• **ZOBERBIER, Manfred**
**89081 Ulm (DE)**
• **GOERKE, Roland**
**89160 Dornstadt (DE)**

(74) Vertreter: **Meel, Thomas**
**EADS Deutschland GmbH**
**Patentabteilung**
**D-88039 Friedrichshafen (DE)**

(56) Entgegenhaltungen:
JP-A- 2004 025 971  US-A1- 2005 055 143
US-A1- 2005 165 516

**Beschreibung**

Die Erfindung betrifft ein Verfahren zur Flugführung mehrerer im Verband fliegender Flugzeuge gemäß dem Oberbegriff des Patentanspruchs 1.

Die Flugführung im Formationsflug wie z.B. aus US 2005/0165516 A1 und US 6,587,757 B2 bekannt, befasst sich mit einem koordinierten Flug mehrerer Flugzeuge. Eine automatische Flugführung im Formationsflug muss dem Flugkontrollsystem eines Folgeflugzeugs Referenzsignale liefern, um das Folgeflugzeug auf einer relativen Position zum Mutterflugzeug zu halten. Die Referenzsignale müssen äußere Störungen wie Windböen oder vorherige Steuerungsfehler aussondern und müssen die unterschiedlichen Dynamiken der Trajektorie des Folgeflugzeugs insbesondere bezüglich größerem oder kleinerem Kurvenradius kompensieren.

Das Problem eines automatisierten Flugzeugnahformationsfluges betrifft die Bestimmung der Trajektorie eines Folgeflugzeugs sowie dessen relativer Position zu einem Mutterflugzeugs. Die Bestimmung der Trajektorie eines Flugzeugs umfasst hierbei üblicherweise zwei Schritte, nämlich die Rekonstruktion der Trajektorie des Mutterflugzeugs und die Bestimmung der Trajektorie des Folgeflugzeugs als Ableitung der Trajektorie des Mutterflugzeugs unter Berücksichtigung eines vorgegebenen longitudinalen, lateralen, und vertikalen Abstandes zwischen Mutter- und Folgeflugzeug.

Bei einem Nahformationsflug beträgt der Abstand zwischen Mutter- und Folgeflugzeug typischerweise drei Spannweiten oder weniger. Daraus folgt, dass die flugdynamischen Bewegungen des Folgeflugzeugs, insbesondere Geschwindigkeit und Beschleunigung, annähernd gleich denen des Mutterflugzeugs sind.

Bei einem taktischen Formationsflug beträgt der laterale Abstand zwischen Mutter- und Folgeflugzeug typischerweise bis zu 300 m. Der longitudinale Abstand beträgt in Zeit- bzw. Längeneinheiten typischerweise zwischen 10 sec. bzw. 0,3 NM (1 NM = 1 Seemeile) und 1 min. bzw. 3 NM. Es sind aber auch Abstände von bis 100 NM möglich. Somit kann in einem offenen Formationsflug die Flugdynamik des Folgeflugzeugs nicht als identisch mit der des Mutterflugzeugs angesehen werden. Der größere laterale Abstand erfordert beim Kurvenflug eine Geschwindigkeitsänderung um die vergrößerte oder verkleinerte Länge der Trajektorie zu kompensieren.

Allgemein unterscheidet man bei der automatischen Flugführung zwischen einem Synchronmode und einem Tunnelmode. Bei dem Synchronmode werden Geschwindigkeits- und Höhenänderungen des Mutterflugzeugs unverzüglich von dem Folgeflugzeugs entsprechend durchgeführt. Im Tunnelmode werden Geschwindigkeits- und Höhenänderungen des Mutterflugzeugs von dem Folgeflugzeug dann ausgeführt, wenn das Folgeflugzeug exakt die Position (unter Berücksichtigung des lateralen Abstandes) erreicht, an der das Mutterflugzeug die Änderung einleitete.

Aus US 4,674,710 ist das Produkt SKE (Station Keeping Equipment) für einen automatischen offenen Formationsflug bekannt. Es basiert auf dem gegenseitigen Austausch von Funkdaten zwischen den Flugzeugen innerhalb des Flugverbandes. Direktionale Antennen werden verwendet zur Bestimmung Anordnung der Flugzeuge innerhalb des Verbandes relativ zu einem Folgeflugzeug. Das System wurde entwickelt um eine Formation von Flugzeugen während eines Geradeausflugs bzw. während eines Kurvenflugs zu erhalten. Das dem System zugrunde liegende Verfahren ist allerdings für den Einsatz bei hochdynamischen Flugmanövern wenig geeignet. Das Verfahren gemäß US 4,674,710 benötigt zur Sicherung der Formation beim Kurvenflug eine feste Rollrate, einen festen Hängewinkel sowie einen festen Kurvenradius.

Aus US 6,405,124 B1 ist ein Verfahren zur Flugführung gemäß dem Oberbegriff des Anspruchs 1 bekannt. Hierbei wird zu einer vorgegebenen Trajektorie eine Solltrajektorie mit einem Sollabstand erzeugt, auf der das Folgeflugzeug dem Mutterflugzeug folgt. Dem Folgeflugzeug wird dabei ein virtuelles Flugzeug zugeordnet, das parallel zum Folgeflugzeug auf der Isttrajektorie im Sollabstand geführt wird. Die Abweichung des virtuellen Flugzeugs von der Isttrajektorie wird als Regelgröße verwendet, um das reale Flugzeug auf die Solltrajektorie zu regeln.

Es ist Aufgabe der Erfindung ein gattungsgemäßes Verfahren anzugeben, bei welchem die Formation von Flugzeugen auch bei hochdynamischen Flugmanövern aufrechterhalten werden kann.

Diese Aufgabe wird dem Verfahren gemäß Patentanspruch 1 gelöst. Vorteilhafte Ausführungen der Erfindung sind Gegenstand von Unteransprüchen.

Gemäß der Erfindung wird an jeder momentanen Position $P'_{akt}$ des Folgeflugzeugs eine zur der Trajektorie des Muterflugzeugs parallele Solltrajektorie des Folgeflugzeugs berechnet, welche durch die momentane Istposition $P'_{akt}$ und einen Referenzpunkt $P'_{RP}$ verläuft, wobei der Referenzpunkt $P'_{RP}$ unter Berücksichtigung der lateralen und vertikalen Istabstände $y_{Ist}$ und $z_{Ist}$ zwischen der Trajektorie des Mutterflugzeugs und der des Folgeflugzeugs die Projektion eines auf der Trajektorie des Mutterflugzeugs durch den longitudinalen Sollabstand $x_{Soll}$ zwischen Mutterflugzeug und Folgeflugzeug beabstandeten Punktes $P_{RP}$ ist, wobei die Berechnung der Trajektorie (2) des Folgeflugzeugs unter Berücksichtigung des lateralen Istabstandes $y_{Ist}$ zur Trajektorie (1) des Mutterflugzeugs durch Bestimmung von Stützstellen $P'$ auf der Trajektorie (2) des Folgeflugzeugs erfolgt, welche dieselben Zeitkoordinaten wie die korrespondierenden Stützstellen auf der Trajektorie (1) des Mutterflugzeugs aufweisen und wobei die Ermittlung von Korrektursignalen folgende Schritte umfasst:

-    Messung des longitudinalen Istabstandes $x_{Ist}$, des lateralen Istabstandes $y_{Ist}$ und vertikalen Istabstandes $z_{ist}$ zwi-

schen der Trajektorie des Mutterflugzeugs und der des Folgeflugzeugs an der momentanen Position P'$_{akt}$ des Folgeflugzeugs

- Berechnung der longitudinalen Abweichung $\Delta x$, der vertikalen Abweichung $\Delta z$ und lateralen Abweichung $\Delta y$ der momentanen Istposition P'$_{akt}$ und der Sollposition P'$_{Soll}$ des Folgeflugzeugs aus den jeweiligen Sollwerten x$_{Soll}$, z$_{Soll}$, y$_{Soll}$ und den gemessenen Istwerten x$_{Ist}$, z$_{Ist}$, y$_{Ist}$,
- Berechnung der Sollgeschwindigkeit und Sollbeschleunigung des Folgeflugzeugs am Punkt P'$_{RP}$,
- Berechnung der Sollkrümmung, der Sollsteigrate und des Sollkrümmungswinkels $\Psi$ der Trajektorie des Folgeflugzeugs an der momentanen Position P'$_{akt}$ des Folgeflugzeugs.

In einer vorteilhaften Ausführung des Verfahrens werden auf der Trajektorie des Mutterflugzeugs eine Anzahl von Stützstellen P bestimmt, für welche die räumlichen Koordinaten und in bezug auf einer für den Verband einheitlichen Zeitbasis eine Zeitkoordinate bekannt sind.

Zweckmäßig wird die vertikale Abweichung $\Delta z$ zwischen der Trajektorie des Folgeflugzeugs und der Sollposition bestimmt.

Der Bodenkurswinkels $\Psi$ des Folgeflugzeugs wird insbesondere als Winkel zwischen der Richtung der Trajektorie des Folgeflugzeugs an dessen momentaner Position P'$_{akt}$ und dem geographischen Norden bestimmt.

Der Referenzpunkt P$_{RP}$ auf der Trajektorie des Mutterflugzeugs und der Referenzpunkt P'$_{RP}$ auf der Trajektorie des Folgeflugzeugs weisen vorteilhaft dieselbe Zeitkoordinate auf.

Die Berechnung der Trajektorie des Folgeflugzeugs erfolgt vorteilhaft unter Berücksichtigung des lateralen Istabstandes y$_{Ist}$ zur Trajektorie des Mutterflugzeugs durch Bestimmung von Stützstellen P' auf der Trajektorie des Folgeflugzeugs, welche dieselben Zeitkoordinaten wie die korrespondierenden Stützstellen auf der Trajektorie des Mutterflugzeugs aufweisen.

Gemäß der Erfindung kann ein Folgeflugzeugs entlang einer berechneten Trajektorie geführt werden, wobei die Führung für die drei Raumachsen jeweils separat und voneinander unabhängig erfolgt. Für jede Raumachse kann die Flugführung automatisch durch ein Autopilot- oder ein Autothrottle-System erfolgen. Gemäß der Erfindung werden zur Flugführung für die einzelnen Raumachsen folgende Parameter zur Erzeugung von entsprechenden Korrektursignalen ermittelt:

für die longitudinale Raumachse: die longitudinale Abweichung $\Delta x$ (Differenz zwischen Referenzpunkt P'$_{RP}$ und aktueller Position P'$_{akt}$ auf der Trajektorie des Folgeflugzeugs), die Sollgeschwindigkeit und die Sollbeschleunigung;

für die laterale Raumachse: die laterale Abweichung $\Delta y$ (Differenz zwischen der lateralen Istabweichung y$_{Ist}$ und der Sollabweichung y$_{Soll}$), die Krümmung der Trajektorie des Folgeflugzeugs, den Bodenkurswinkel;

für die vertikale Raumachse: die vertikale Abweichung $\Delta z$ (im Tunnelmodus : Differenz zwischen der aktuellen Höhe des Folgeflugzeugs und der Summe aus vorgegebener Abweichung z$_{Soll}$ und der Höhe der Stützstelle, welche der Projektion der aktuellen Position des Folgeflugzeugs auf die Trajektorie des Mutterflugzeugs entspricht; im Synchronmodus : Differenz zwischen der aktuellen Höhe des Folgeflugzeugs und der aktuellen Höhe des Mutterflugzeugs plus der vorgegebener Abweichung z$_{Soll}$) und die Sollsteigrate.

Das erfindungsgemäße Verfahren zur Flugführung ist abhängig von den Zeitkoordinaten der jeweiligen Positionen des Mutterflugzeugs und dem Folgeflugzeug. Gemäß dem Verfahren werden in Bezug auf den longitudinale Abstand, den vertikalen Abstand und den lateralen Abstand zwischen Mutterflugzeug und Folgeflugzeug sowie der darin enthaltenen jeweiligen Abweichungen die einzelnen Regelachsen voneinander entkoppelt. Eine Nachführung der Position des Folgeflugzeugs bezüglich einer Regelachse ist somit unabhängig von den anderen Regelachsen möglich. Diese Entkopplung wird durch die Einführung des Referenzpunktes P'$_{RP}$ auf der Trajektorie des Folgeflugzeugs erreicht. Mit dem Referenzpunkt P'$_{RP}$ werden der longitudinale Sollabstand x$_{Soll}$ und der laterale Istabstand y$_{Ist}$ sowie der vertikale Istabstand z$_{Ist}$ miteinander verknüpft. Zweckmäßig wird die Solltrajektorie des Folgeflugzeugs kontinuierlich zu jeder aktuellen Position P'$_{akt}$ des Folgeflugzeugs berechnet.

Mit dem erfindungsgemäßen Verfahren ist es möglich, die Trajektorie des Folgeflugzeugs durch zeitabhängige (time-tagged) Raumkoordinaten zu berechnen, wobei sich diese Raumkoordinaten aus zeitabhängigen Messungen der räumlichen Position des Mutterflugzeugs auf dessen Trajektorie ergeben. Die Position eines Flugzeugs wird somit im Weiteren als 4-dimensionale Größe verstanden, welche sich aus einer Zeit- und drei Raumkoordinaten zusammensetzt. Diese Informationen lassen sich vom Mutterflugzeug idealerweise durch das bordeigene Navigationssystem ermitteln. Die Übertragung der zeitabhängigen Position des Mutterflugzeugs zu den Folgeflugzeugen innerhalb des Verbandes erfolgt vorteilhaft mittels Funk. Das erfindungsgemäße Verfahren ist selbstverständlich ebenso dann einsetzbar, wenn das Mutterflugzeug eines Verbandes ein Folgeflugzeug eines übergeordneten Verbandes ist.

Die Erfindung sowie weitere vorteilhafte Ausführung werden anhand von Zeichnungen näher erläutert. Es zeigen:

Fig. 1    in ebener schematischer Darstellung eine Trajektorie eines Mutterflugzeugs mit Stützstellen P sowie einer geschätzten Trajektorie eines Folgeflugzeugs mit berechneten Stützstellen P',

Fig. 2    eine schematische Darstellung zur Berechnung der Stützstelle $P'_{RP}$ auf der Trajektorie des Folgeflugzeugs bei konkaver und konvexer Flugkurve,

Fig. 3    eine schematische Darstellung zur Berechnung der Sollgeschwindigkeit und der Sollbeschleunigung,

Fig. 4    eine schematische Darstellung zur Berechnung des Krümmungsradius einer Trajektorie,

Fig. 5    eine schematische dreidimensionale Darstellung einer Situation im Formationsflug zur Veranschaulichung der Abweichungen der Trajektorie des Folgeflugzeugs von den vorgegebenen Werten.

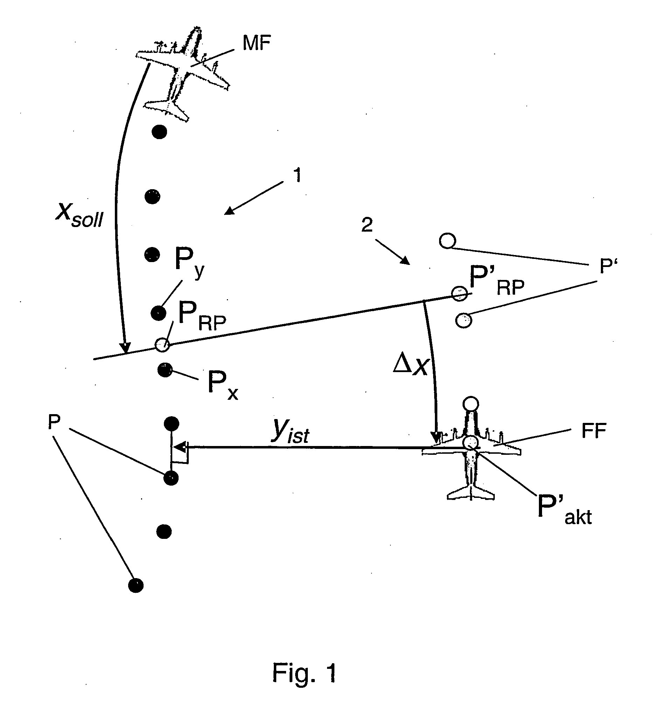

Fig. 1 zeigt in ebener Darstellung eine Trajektorie 1 eines Mutterflugzeugs MF mit Stützstellen P. Des Weiteren zeigt Fig. 1 die geschätzte Trajektorie 2 eines Folgeflugzeugs FF mit Stützstellen P', welche mittels der Stützstellen P auf der Trajektorie 1 des Mutterflugzeugs berechnet wurden.

Mit Bezugzeichen $x_{Soll}$ ist der vorgegebene relative longitudinale Abstand zwischen dem Mutterflugzeug MF und dem Folgeflugzeug FF bezeichnet. Der laterale Istabstand zwischen Mutterflugzeug MF und dem Folgeflugzeug FF ist mit $y_{Ist}$ bezeichnet. Der vorgegebene vertikale Abstand ist nicht dargestellt. Der longitudinale Sollabstand $x_{Soll}$ wird zweckmäßig vor der Formation der Flugzeuge zu einem Verband festgelegt, z.B. durch die Piloten. Entsprechendes gilt für einen vorgegebenen vertikalen und lateralen Sollabstand. Die Abstände können dabei entweder in Zeit- oder Entfernungseinheiten angegeben werden.

Zur Bestimmung einer Stützstelle $P_{RP}$ für den Referenzpunkt auf der Trajektorie des Mutterflugzeugs wird von der aktuellen Position $P_{ist}$ des Mutterflugzeugs entlang der Trajektorie 1 der longitudinale Abstand $x_{Soll}$ bestimmt. Die Bestimmung des Abstandes $x_{Soll}$ erfolgt entweder bezüglich der Zeit oder der Entfernung nach mathematisch bekannten Verfahren, z.B. Integration über die Wegstrecke oder den Zeitabschnitt.

Liegt der so berechnete Referenzpunkt $P_{RP}$ zwischen zwei benachbarten Stützstellen $P_x$ und $P_y$, wird die zu dem Referenzpunkt $P_{RP}$ gehörige Stützstelle durch Interpolation berechnet. Unter Berücksichtigung der lateralen und vertikalen Istabstände $y_{Ist}$ und $z_{ist}$ wird nun eine Stützstelle $P'_{RP}$ berechnet, welche definitionsgemäß auf der geschätzten Trajektorie 2 des Folgeflugzeugs liegt und welche parallel zu der Trajektorie 1 des Mutterflugzeugs ist.

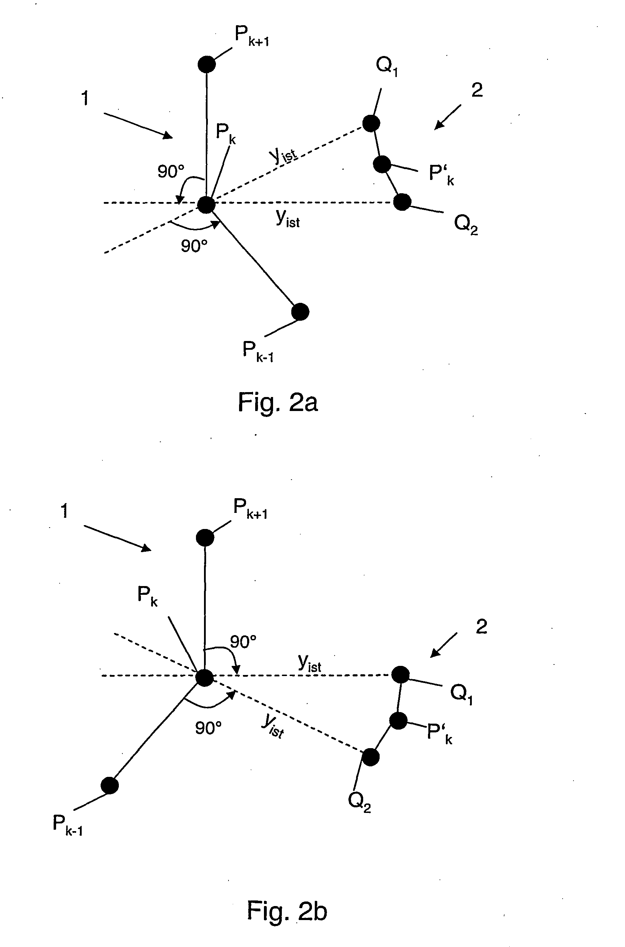

Fig. 2 zeigt im Detail, wie die Trajektorie für das Folgeflugzeug und somit die Stützstelle $P'_{RP}$ ermittelt wird. Auf der Trajektorie 1 des Mutterflugzeugs werden eine zur jeden Stützstelle $P_k$ direkt zeitlich vorangehende Stützstelle $P_{k-1}$ und eine direkt zeitlich nachfolgende Stützstelle $P_{k+1}$ betrachtet. Unter Berücksichtigung des lateralen Istabstandes $y_{Ist}$ werden Stützstellen $Q_1$ und $Q_2$ auf der Trajektorie 2 des Folgeflugzeugs berechnet.

Bei einer konkaven Flugkurve (Fig.2a) stehen dabei eine Gerade durch die Stützstelle $Q_1$ und $P_k$ senkrecht auf einer Geraden durch die Stützstellen $P_{k-1}$ und $P_k$. Gleichzeitig steht eine Gerade durch die Stützstelle $Q_2$ und $P_k$ senkrecht auf einer Geraden durch die Stützstellen $P_k$ und $P_{k+1}$. Bei einer konvexen Flugkurve (Fig. 2b) stehen entsprechend eine Gerade durch die Stützstelle $Q_1$ und $P_k$ senkrecht auf einer Geraden durch die Stützstellen $P_k$ und $P_{k+1}$ sowie eine Gerade durch die Stützstelle $Q_2$ und $P_k$ senkrecht auf einer Geraden durch die Stützstellen $P_k$ und $P_{k-1}$. Die Stützstelle $P'_k$ auf der Trajektorie 2 des Folgeflugzeugs ist somit der Schwerpunkt der Verbindungslinie zwischen der Stützstelle $Q_1$ und $Q_2$.

Entsprechend ist es möglich, aus bekannten Stützstellen P auf der Trajektorie 1 des Mutterflugzeugs weitere Stützstellen P' auf der Trajektorie 2 des Folgeflugzeugs zu berechnen. Der Referenzpunkt $P'_{RP}$ auf der Trajektorie des Folgeflugzeugs ergibt sich aus einer Interpolation zwischen den benachbarten Stützstellen $P'_x$ und $P'_y$ auf der Trajektorie des Folgeflugzeug, die mit dem obenbeschriebenen Verfahren aus den Stützstellen $P_x$ und Py direkt vor und nach dem Referenzpunkt $P_{RP}$ auf der Trajektorie des Mutterflugzeugs berechnet worden sind.

Die longitudinale Abweichung $\Delta x$ (Fig. 1) berechnet sich durch Integration zwischen der aktuellen Position $P'_{akt}$ des Folgeflugzeugs und der Stützstelle $P'_{RP}$, wobei die Integration entweder bezüglich der Zeit oder der Entfernung erfolgt. Die Integration erfolgt typischerweise bezüglich der Zeit, wenn als longitudinaler Abstand $x_{Soll}$ eine Zeit vorgegeben ist. Die Integration erfolgt im anderen Fall bezüglich der Entfernung, wenn als longitudinaler Abstand $x_{Soll}$ eine Entfernung vorgegeben ist. Erfolgt die Integration bezüglich der Entfernung werden zweckmäßig jeweils die Liniensegmente benachbarter Stützstellen aufintegriert.

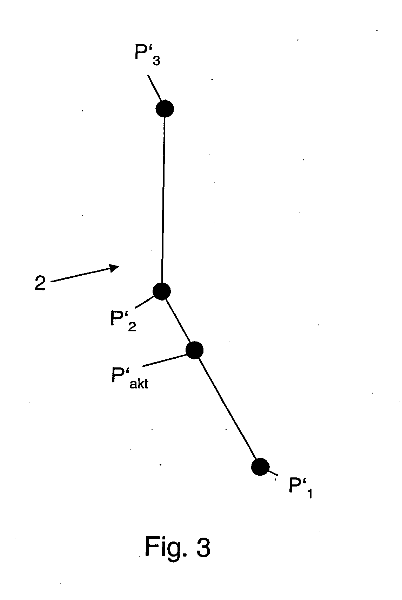

Eine schematische Darstellung zur Berechnung der Sollgeschwindigkeit und der Sollbeschleunigung eines Folgeflugzeugs zeigt Fig. 3.

Fig. 3 zeigt die Trajektorie 2 eines Folgeflugzeugs mit mehreren Stützstellen P', beispielhaft $P'_1$, $P'_2$, und $P'_3$, sowie die aktuelle Position $P'_{akt}$ des Folgeflugzeugs. Es wird nun die Geschwindigkeit $V(P'_1 P'_2)$ für denjenigen Längenabschnitt berechnet, welcher der aktuellen Position $P'_{akt}$ am nächsten ist. Anschließend wird die Geschwindigkeit $V(P'_2 P'_3)$ für den zeitlich nachfolgenden Längenabschnitt berechnet:

$$V(P'_1 P'_2) = \frac{x(P'_2) - x(P'_1)}{t(P'_2) - t(P'_1)}$$

$$V(P'_2 P'_3) = \frac{x(P'_3) - x(P'_3)}{t(P'_3) - t(P'_2)}$$

x bezeichnet hierbei die Raumkoordinate der jeweiligen Stützstelle P' und t bezeichnet die Zeitkoordinate der jeweiligen Stützstelle P'.

Die Sollbeschleunigung an der Position $P'_{akt}$ berechnet sich demnach wie folgt:

$$a(P'_{akt}) = \frac{V(P'_2 P'_3) - V(P'_1 P'_2)}{t(P'_2) - t(P'_1)}$$

Die Sollgeschwindigkeit an der Position $P'_{akt}$ berechnet sich somit gemäß:

$$V(P'_{akt}) = V(P'_2 P'_3) - a(P'_{akt})[t(P'_2) - t(P'_{akt})]$$

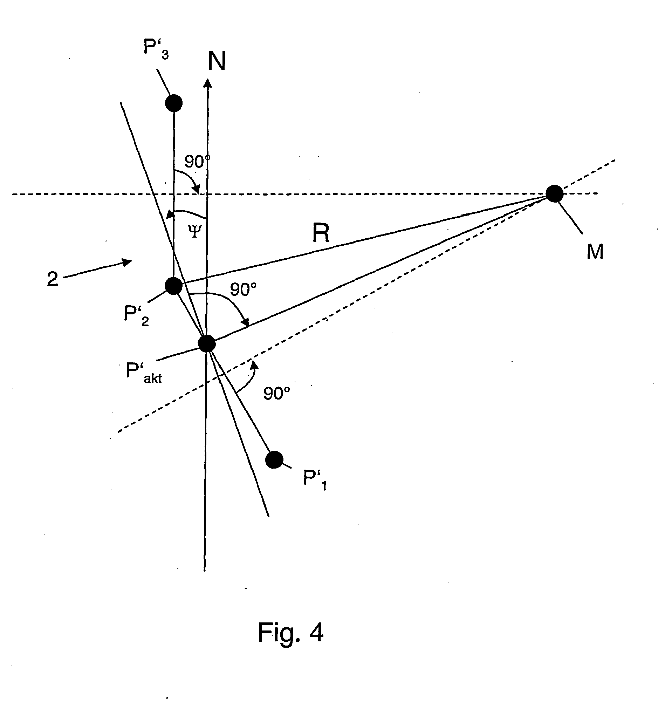

Eine schematische Darstellung zur Berechnung des Krümmungsradius einer Trajektorie zeigt Fig. 4. Zur Berechnung des Krümmungsradius R der Trajektorie 2 des Folgeflugzeugs werden drei Stützpunkte $P'_1$, $P'_2$ und $P'_3$ und die sich daraus ergebenen Strecken $A_1$ und $A_2$ herangezogen. $A_1$ bezeichnet dabei die Strecke zwischen $P'_1$ und $P'_2$, welche der aktuellen Position $P'_{akt}$ des Folgeflugzeugs am nächsten ist. $A_2$ bezeichnet die direkt zeitlich nachfolgende Strecke zwischen $P'_2$ und $P'_3$. $P'_2$ ist hierbei die zeitlich direkt auf die aktuelle Position $P'_{akt}$ folgende Stützstelle.

Der Krümmungsradius R ist der Radius des Kreises mit Mittelpunkt M auf dem sowohl $P'_1$, $P'_2$, als $P'_3$ liegt. Die jeweiligen Streckenhalbierenden der Strecken A1 und A2 schneiden sich im Punkt M. Die Strecke zwischen M und $P'_2$ kann somit als Radius R der Krümmung bezeichnet werden. Die Krümmung der Kurve der Trajektorie berechnet sich definitionsgemäß durch 1/R, wobei für rechte Kurven ein positives Vorzeichen und für linke Kurven ein negatives Vorzeichen hinzugefügt wird.

Der Bodenkurswinkel $\Psi$ berechnet sich aus dem Winkel an der aktuellen Position $P'_{akt}$ des Folgeflugzeugs zwischen der Senkrechten $R_1$ auf die Verbindung MP zwischen dem Punkt M und der aktuellen Position $P'_{akt}$ und dem geographischen Norden N.

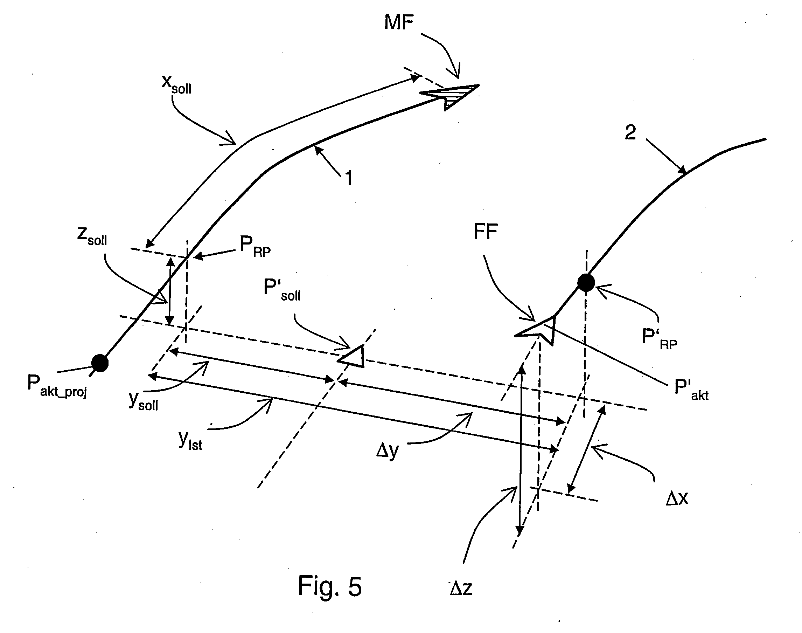

Fig. 5 zeigt eine schematische dreidimensionale Darstellung einer Situation im Formationsflug. Aus der Darstellung geht bezüglich der einzelnen Raumrichtungen die Abweichung der Trajektorie des Folgeflugzeugs von den vorgegebenen Sollwerten hervor. Die Darstellung zeigt ein Mutterflugzeug MF auf ihrer Trajektorie 1 und ein Folgeflugzeug auf der Trajektorie 2 sowie die Referenzpunkte $P_{RP}$ und $P'_{RP}$ auf den jeweiligen Trajektorien 1,2.

Auf der Trajektorie 2 befindet sich das Folgeflugzeug FF auf der aktuellen Position $P'_{akt}$. Die Sollposition ist mit $P'_{Soll}$ bezeichnet. Aus der Darstellung ergeben sich die jeweiligen Sollwerte $y_{Soll}$, $x_{Soll}$, $z_{Soll}$ sowie Istwerte $y_{Ist}$, $x_{Ist}$, $z_{Ist}$ bezüglich der jeweiligen Raumrichtungen und die damit verknüpften Abweichungen $\Delta x$, $\Delta y$, $\Delta z$.

Zur Kompensation der vertikalen Abweichung ist die Berechnung einer Steigrate erforderlich. Hierzu wird die Steigrate des Mutterflugzeugs berechnet. Zur Berechnung der Steigrate wird zunächst die aktuelle Position $P'_{akt}$ des Folgeflugzeugs auf den Punkt $P_{akt\_proj}$ auf der Trajektorie 1 des Mutterflugzeugs projiziert. Aus zwei hierzu unmittelbar benachbarten Stützstellen (nicht dargestellt), wobei die eine eine frühere Zeitkoordinate und die andere eine spätere Zeitkoordinate als die projizierte Stützstelle $P_{akt\_proj}$ aufweist, wird die Steigrate berechnet. Zweckmäßig können weitere Stützstellen auf der Trajektorie 1 mit in die Berechnung einbezogen werden, z.B. mittels bekannter Filter- oder Interpolationsmethoden.

**Patentansprüche**

1. Verfahren zur Flugführung von mehreren in bezug zueinander im Verband fliegender Flugzeuge, wobei Korrektursignale für ein Autopilotsystem oder eine Kommandoanzeige erzeugt werden, um ein oder mehrere Folgeflugzeuge innerhalb des Verbandes einem Mutterflugzeug des Verbandes in einer vorgebbaren relativen Position folgen zu lassen,

**dadurch gekennzeichnet, dass**

an jeder momentanen Position $P'_{akt}$ des Folgeflugzeugs eine zur der Trajektorie (1) des Muterflugzeugs parallele Trajektorie (2) des Folgeflugzeugs berechnet wird, welche durch die momentane Istposition $P'_{akt}$ und einen Referenzpunkt $P'_{RP}$ verläuft, wobei der Referenzpunkt $P'_{RP}$ unter Berücksichtigung der lateralen und vertikalen Istabstände $y_{Ist}$ und $z_{Ist}$ zwischen der Trajektorie (1) des Mutterflugzeugs und der des Folgeflugzeugs die Projektion eines auf der Trajektorie (1) des Mutterflugzeugs durch den longitudinalen Sollabstand $x_{Soll}$ zwischen Mutterflugzeug und Folgeflugzeug beabstandeten Punktes $P_{RP}$ ist, wobei die Berechnung der Trajektorie (2) des Folgeflugzeugs unter Berücksichtigung des lateralen Istabstandes $y_{Ist}$ zur Trajektorie (1) des Mutterflugzeugs durch Bestimmung von Stützstellen P' auf der Trajektorie (2) des Folgeflugzeugs erfolgt, welche dieselben Zeitkoordinaten wie die korrespondierenden Stützstellen auf der Trajektorie (1) des Mutterflugzeugs aufweisen und wobei die Ermittlung von Korrektursignalen folgende Schritte umfasst:

- Messung des longitudinalen Istabstandes $x_{Ist}$, des lateralen Istabstandes $y_{Ist}$ und vertikalen Istabstandes $z_{ist}$ zwischen der Trajektorie des Mutterflugzeugs und der des Folgeflugzeugs an der momentanen Position $P'_{akt}$ des Folgeflugzeugs
- Berechnung der longitudinalen Abweichung $\Delta x$, der vertikalen Abweichung $\Delta z$ und lateralen Abweichung $\Delta r$ der momentanen Istposition $P'_{akt}$ und der Sollposition $P'_{Soll}$ des Folgeflugzeugs aus den jeweiligen Sollwerten $x_{Soll}$, $z_{Soll}$, $y_{Soll}$ und den gemessenen Istwerten $x_{Ist}$, $z_{Ist}$, $y_{Ist}$,
- Berechnung der Sollgeschwindigkeit und Sollbeschleunigung des Folgeflugzeugs am Punkt $P'_{RP}$,
- Berechnung der Sollkrümmung, der Sollsteigrate und des Sollkrümmungswinkels $\Psi$ der Trajektorie (2) des Folgeflugzeugs an der momentanen Position $P'_{akt}$ des Folgeflugzeugs.

2. Verfahren nach Anspruch 1, wobei auf der Trajektorie (1) des Mutterflugzeugs eine Anzahl von Stützstellen P bestimmt werden, für welche die räumlichen Koordinaten und in bezug auf einer für den Verband einheitlichen Zeitbasis eine Zeitkoordinate bekannt sind.

3. Verfahren nach einem der vorangehenden Ansprüche, wobei der Bodenkurswinkels $\Psi$ des Folgeflugzeugs als Winkel zwischen der Richtung der Trajektorie (2) des Folgeflugzeugs an dessen momentaner Position $P'_{akt}$ und dem geographischen Norden bestimmt wird.

4. Verfahren gemäß Anspruch 1, wobei der Referenzpunkt $P_{RP}$ und der Referenzpunkt $P'_{RP}$ dieselbe Zeitkoordinate aufweisen.

5. Verfahren einem der Ansprüche 2-4, wobei die zeitabhängigen Stützstellen P auf der Trajektorie des Mutterflugzeugs äquidistant zueinander sind.

6. Verfahren nach einem der vorangehenden Ansprüche, wobei die Bestimmung der longitudinalen Abweichung $\Delta x$ in einer Längenangabe erfolgt als Summe einzelner Längensegmente benachbarten Stützstellen zwischen der Stützstelle des Referenzpunkts $P'_{RP}$ und der aktuellen Position $P'_{akt}$ des Folgeflugzeugs.

7. Verfahren nach einem der Ansprüche 1 bis 6, wobei die Bestimmung der longitudinalen Abweichung $\Delta x$ in einer Zeitangabe erfolgt als Differenz der Zeitkoordinate der Stützstelle des Referenzpunkts $P'_{RP}$ und der aktuellen Position $P'_{akt}$ des Folgeflugzeugs.

8. Verfahren nach einem der vorangehenden Ansprüche, wobei die Trajektorie des Mutterflugzeugs als Trajektorie eines Folgeflugzeugs eines Mutterflugzeugs eines übergeordneten Verbandes berechnet wird.

9. Verfahren nach einem der vorangehenden Ansprüche, wobei das Mutterflugzeug dem einen oder mehreren Folgeflugzeuge die aktuelle räumliche Position und aktuelle Zeitkoordinate mittels Funks übermittelt.

**Claims**

1. Method for controlling a plurality of aircraft flying in formation with one another, with correction signals being produced for an autopilot system or a command indication in order to allow one or more following aircraft within the formation to follow a lead aircraft in the formation in a predeterminable relative position,

**characterized in that**

a trajectory (2) parallel to the trajectory (1) of the lead aircraft is calculated for the following aircraft at each instantaneous position $P'_{act}$ of the following aircraft, which trajectory (2) passes through the instantaneous actual position $P'_{act}$ and a reference point $P'_{RP}$, with the reference point $P'_{RP}$ being the projection of a point $P_{RP}$ separated by the longitudinal nominal distance $x_{nom}$ between the lead aircraft and the following aircraft on the trajectory (1) of the lead aircraft, taking into account the lateral and vertical actual separations $y_{act}$ and $z_{act}$ between the trajectory (1) of the lead aircraft and that of the following aircraft, with the trajectory (2) of the following aircraft being calculated taking into account the lateral actual separation $y_{act}$ from the trajectory (1) of the lead aircraft by definition of support points P' on the trajectory (2) of the following aircraft, which support points P' have the same time coordinates as the corresponding support points on the trajectory (1) of the lead aircraft, and with the process of determining correction signals comprising the following steps:

- measurement of the longitudinal actual separation $x_{act}$, of the lateral actual separation $y_{act}$ and of the vertical actual separation $z_{act}$ between the trajectory of the lead aircraft and that of the following aircraft at the instantaneous position $P'_{act}$ of the following aircraft
- calculation of the longitudinal discrepancy $\Delta_x$, of the vertical discrepancy $\Delta_z$ and of the lateral discrepancy $\Delta_y$ of the instantaneous actual position $P'_{act}$ and the nominal position $P'_{nom}$ of the following aircraft from the respective nominal values $x_{nom}$, $z_{nom}$, $y_{nom}$ and the measured actual values $x_{act}$, $z_{act}$, Yact
- calculation of the nominal velocity and nominal acceleration of the following aircraft at the point $P'_{RP}$,
- calculation of the nominal turn rate, of the nominal climb rate and of the nominal turn angle $\psi$ of the trajectory (2) of the following aircraft at the instantaneous position $P'_{act}$ of the following aircraft.

2. Method according to Claim 1, wherein a number of support points P are determined on the trajectory (1) of the lead aircraft, for which support points P the spatial coordinates and a time coordinate with respect to a standard time base for the formation are known.

3. Method according to one of the preceding claims, wherein the ground track angle $\psi$ of the following aircraft is defined as the angle between the direction of the trajectory (2) of the following aircraft at its instantaneous position $P'_{act}$ and geographic north.

4. Method according to Claim 1, wherein the reference point $P_{RP}$ and the reference point $P'_{RP}$ have the same time coordinates.

5. Method according to one of Claims 2 - 4, wherein the time-dependent support points P are equidistant from one another on the trajectory of the lead aircraft.

6. Method according to one of the preceding claims, wherein the definition of the longitudinal discrepancy $\Delta x$ in the form of a longitude statement is produced as the sum of the individual longitude segments of adjacent support points between the support points of the reference point $P'_{RP}$ and the instantaneous position $P'_{act}$ of the following aircraft.

7. Method according to one of Claims 1 to 6, wherein the longitudinal discrepancy $\Delta x$ is defined in the form of a time statement as the difference between the time coordinate of the support point of the reference point $P'_{RP}$ and the instantaneous position $P'_{act}$ of the following aircraft.

8. Method according to one of the preceding claims, wherein the trajectory of the lead aircraft is calculated as the trajectory of an aircraft following a lead aircraft in a higher-level formation.

9. Method according to one of the preceding claims, wherein the lead aircraft transmits the instantaneous spatial position and the instantaneous time coordinate by means of radio to the one or more following aircraft.

**Revendications**

1. Procédé de guidage en vol de plusieurs aéronefs volant en patrouille en référence les uns par rapport aux autres, des signaux de correction pour un système de pilotage automatique ou un indicateur de commande étant générés pour permettre à un ou plusieurs aéronefs suiveurs au sein de la patrouille de suivre un aéronef leader de la patrouille dans une position relative pouvant être prédéfinie, **caractérisé en ce qu'**à chaque position momentanée $P'_{axt}$ de l'aéronef suiveur est calculée une trajectoire (2) de l'aéronef suiveur parallèle à la trajectoire (1) de l'aéronef leader, laquelle passe par la position réelle momentanée P'$_{akt}$ et un point de référence P'$_{RP}$, le point de référence P'$_{RP}$ étant la projection d'un point P$_{RP}$ sur la trajectoire (1) de l'aéronef leader espacé par l'écart de consigne longitudinal x$_{soll}$ entre l'aéronef leader et l'aéronef suiveur en tenant compte des écarts réels dans le sens latéral et vertical y$_{ist}$ et z$_{ist}$ entre la trajectoire (1) de l'aéronef leader et celle de l'aéronef suiveur, le calcul de la trajectoire (2) de l'aéronef suiveur étant effectué en tenant compte de l'écart latéral réel y$_{ist}$ par rapport à la trajectoire (1) de l'aéronef leader en déterminant des points de base P' sur la trajectoire (2) de l'aéronef suiveur qui présentent les mêmes coordonnées temporelles que les points de base correspondants sur la trajectoire (1) de l'aéronef leader et la détermination des signaux de correction comprenant les étapes suivantes :

- Mesure de l'écart longitudinal réel x$_{ist}$, de l'écart latéral réel y$_{ist}$ et de l'écart vertical réel z$_{ist}$ entre la trajectoire de l'aéronef leader et celle de l'aéronef suiveur à la position momentanée P'$_{akt}$ de l'aéronef leader,
- Calcul de l'écart longitudinal $\Delta$x, de l'écart vertical $\Delta$z et de l'écart latéral $\Delta$y entre la position réelle momentanée P'$_{akt}$ et la position de consigne P'$_{soll}$ de l'aéronef suiveur à partir des valeurs de consigne respectives x$_{soll}$, z$_{soll}$, y$_{soll}$ et des valeurs réelles mesurées x$_{ist}$, z$_{ist}$, y$_{ist}$,
- Calcul de la vitesse de consigne et de l'accélération de consigne de l'aéronef suiveur au point P'$_{RP}$,
- Calcul de la courbure de consigne, du taux de montée de consigne et de l'angle de courbure de consigne $\Psi$ de la trajectoire (2) de l'aéronef suiveur à la position momentanée P'$_{akt}$ de l'aéronef suiveur.

2. Procédé selon la revendication 1, un certain nombre de points de base P étant déterminés sur la trajectoire (1) de l'aéronef leader, pour lesquels les coordonnées dans l'espace ainsi qu'une coordonnée temporelle en référence à une base de temps homogène pour la patrouille sont connues.

3. Procédé selon l'une des revendications précédentes, l'azimut de la trajectoire au sol $\Psi$ de l'aéronef suiveur étant déterminé sous la forme d'un angle entre la direction de la trajectoire (2) de l'aéronef suiveur à sa position momentanée P'$_{akt}$ et le nord géographique.

4. Procédé selon la revendication 1, le point de référence P$_{RP}$ et le point de référence P'$_{RP}$ présentant la même coordonnée temporelle.

5. Procédé selon l'une des revendications 2 à 4, les points de base P dépendant du temps sur la trajectoire de l'aéronef leader étant équidistants les uns des autres.

6. Procédé selon l'une des revendications précédentes, la détermination de l'écart longitudinal $\Delta$x s'effectuant par une indication de longueur sous la forme de la somme des segments de longueur individuels des points de base voisins entre les points de base du point de référence P'$_{RP}$ et la position actuelle P'$_{akt}$ de l'aéronef suiveur.

7. Procédé selon l'une des revendications 1 à 6, la détermination de l'écart longitudinal $\Delta$x s'effectuant par une indication de temps sous la forme de la différence entre la coordonnée temporelle du point de base du point de référence P'$_{RP}$ et la position actuelle P'$_{akt}$ de l'aéronef suiveur.

8. Procédé selon l'une des revendications précédentes, la trajectoire de l'aéronef leader étant calculée sous la forme d'une trajectoire d'un aéronef suiveur d'un aéronef leader d'une patrouille directrice.

9. Procédé selon l'une des revendications précédentes, l'aéronef leader communiquant par voie radioélectrique au ou aux plusieurs aéronefs suiveurs la position actuelle dans l'espace et la coordonnée temporelle actuelle.

Fig. 1

Fig. 2a

Fig. 2b

Fig. 3

Fig. 4

Fig. 5

EP 1 913 569 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050165516 A1
- US 6587757 B2
- US 4674710 A
- US 6405124 B1